# EUROPÄISCHE PATENTANMELDUNG

(11) **EP 4 155 015 A1**
(43) Veröffentlichungstag der Anmeldung: **29.03.2023**
(21) Anmeldenummer: 22197157.5
(22) Anmeldetag: 22.09.2022
(51) Int. Cl.: B23B 31/20

(54) **SPANNVORRICHTUNG FÜR EIN WERKZEUG ODER WERKSTÜCK MIT EINER ZUGSPANNZANGE UND EINEM KOPPLUNGSELEMENT, EINE ZUGSPANNZANGE UND EIN KOPPLUNGSELEMENT**

(30) Priorität: 23.09.2021 DE 102021124718
(71) Anmelder: Haimer GmbH, 86568 Hollenbach-Igenhausen (DE)
(72) Erfinder: Haimer, Franz-Josef, 86568 Hollenbach-Igenhausen (DE)

(57) **Zusammenfassung**

Spannvorrichtung für ein Werkzeug oder Werkstück mit einer Zugspannzange und einem Kopplungselement, Zugspannzange für eine Spannvorrichtung und Kopplungselement für eine Spannvorrichtung sowie Verfahren zum Vorbereiten einer Spannvorrichtung für ein Werkzeug oder Werkstück mit einer Zugspannzange und einem Kopplungselement.

Die Erfindung betrifft eine Spannvorrichtung für ein Werkzeug oder Werkstück mit einer Zugspannzange und einem Kopplungselement, eine Zugspannzange für eine Spannvorrichtung und ein Kopplungselement für eine Spannvorrichtung sowie ein Verfahren zum Vorbereiten einer Spannvorrichtung für ein Werkzeug oder Werkstück mit einer Zugspannzange und einem Kopplungselement.

Erfindungsgemäß ist bei der Spannvorrichtung für ein Werkzeug oder Werkstück mit einer Zugspannzange und einem Kopplungselement ein erster und ein zweiter Bajonett-Verschluss vorgesehen, unter Verwendung derer die Zugspannzange gegen das Kopplungselement verriegelbar und verspannbar ist, wobei der erste und der zweite Bajonett-Verschluss gleichzeitig in Eingriff bringbar ist, wodurch unter Verwendung des ersten Bajonett-Verschlusses die Zugspannzange gegen das Kopplungselement verriegelbar ist und unter Verwendung des zweiten Bajonett-Verschlusses die Zugspannzange gegen das Kopplungselement verspannbar ist.

## Beschreibung

Die Erfindung betrifft eine Spannvorrichtung für ein Werkzeug oder Werkstück mit einer Zugspannzange und einem Kopplungselement, eine Zugspannzange für eine Spannvorrichtung und ein Kopplungselement für eine Spannvorrichtung sowie ein Verfahren zum Vorbereiten einer Spannvorrichtung für ein Werkzeug oder Werkstück mit einer Zugspannzange und einem Kopplungselement.

Es ist bekannt, rotierende Werkzeuge, wie zum Beispiel Bohrer, insbesondere jedoch Fräswerkzeuge, auswechselbar in einer Spannvorrichtung einer Werkzeugmaschine zu halten.

Die Spannvorrichtung umfasst dabei eine im wesentlichen hülsenförmige Spannzange mit zylindrischem Innenmantel und im wesentlichen konischem Außenmantel - kurz auch Außenkonus -, die mit ihrem verjüngten Ende voraus in eine zur Drehachse zentrische ebenfalls konische Aufnahmeöffnung/-bohrung - kurz auch Innenkonus - eines Grundkörpers der Spannvorrichtung eingesetzt wird bzw. ist. Im zylindrischen Innenmantel der Spannzange wird das Werkzeug bzw. ein zylindrischer Schaft des Werkzeugs gespannt.

Die Spannzange ist meist durch eine Vielzahl in Umfangsrichtung verteilt angeordneter, axial verlaufender Schlitze, die die Spannzange radial durchdringen, in eine Vielzahl Zungen unterteilt. Die Schlitze sind lediglich an einem ihrer Längsenden geschlossen und an ihrem anderen Längsende zur Stirnkante der Spannzange offen.

Wird die - geschlitzte - Spannzange mit ihrem Außenkonus in den Innenkonus des Grundkörpers hineingedrückt, wird das mit seinem zylindrischen Schaft in die Spannzange eingesteckte bzw. das mit seinem zylindrischen Schaft im zylindrischen Innenmantel der Spannzange aufgenommene Werkzeug hierbei radial gespant/-klemmt.

Erfolgt das Hineindrücken der Spannzange in den Grundkörper mittels eines - wie auch immer gearteten - Mechanismus bzw. Zugsystems, spricht man von einer Zugspannzange.

Eine solche Spannvorrichtung für ein Werkzeug mit einer Zugspannzange ist beispielsweise aus der DE 44 05 242 A1 bekannt.

Bei dieser Spannvorrichtung wird das Zugsystem unter Verwendung eines Kopplungselements, hier als Kupplungsstück bezeichnet, realisiert, welches auf seiner der Spannzange axial zugewandten Seite mit einem Innengewinde zur Aufnahme eines Gewindekopfs der Zugspannzange und an seinem anderen Ende mit einem - gegenläufig zu dem Innengewinde ausgebildeten - Außengewinde versehen ist. Ähnlich einem Gewindetrieb wird durch Drehen des Kopplungselements die Zugspannzange in die Aufnahmeöffnung des Grundkörpers hineingezogen -, wobei ein Innendurchmesser des zylindrischen Innenmantels der Zugspannzange vermindert und ein Schaft des Werkzeugs in radialem Presssitz in dem zylindrischen Innenmantel Zugspannzange befestigt wird.

Eine weitere solche Spannvorrichtung für ein Werkzeug mit einer solchen Zugspannzange und einem - in diesem Fall andersartigen - Kopplungselement ist aus der EP 0 007 887 A1 bekannt

Hierbei erfolgt die (An-)Kopplung des - andersartig ausgebildeten - Kopplungselements an die Zugspannzange mittels eines an dem Kopplungselement und an der Zugspannzange angeordneten Bajonett-Verschlusses.

Das Kopplungselement ist in Form einer Hülse ausgebildet, an dessen der Zugspannzange zugewandten Ende - innenseitig bzw. an ihrem Innenumfang - (stirnseitig) beginnende Längsnuten und an deren (Längsnuten-)Ende sich anschließende Quernuten vorgesehen sind. Am anderen Ende des Kopplungselements - ebenfalls innenseitig - ist ein Innengewinde für einen Anschluss an eine Zugstange vorgesehen.

Die Zugspannzange sieht an ihrem dem Kopplungselement zugewandten Ende außenseitige bzw. an ihrem Außenumfang angeordnete Verschlusselemente in Form von radialen Vorsprüngen mit geneigten Verschlussflächen vor.

Das Verschließen des Bajonett-Verschlusses - und so die Kopplung von Zugspannzange und Kopplungselement - erfolgt durch Einschieben und Verdrehen der Verschlusselemente der Zugspannzange in die Nuten des Kopplungselements.

In modernen Werkzeugmaschinen rotieren die Werkzeuge mit außerordentlich hoher Drehzahl. Hierbei werden sehr hohe Anforderungen an eine Rundlaufgenauigkeit des Werkzeugs gestellt. Exzentrizitätsfehler und Winkelfehler der Werkzeugdrehachse mindern die Standzeit des Werkzeugs, da bei Rundlauffehlern die Werkzeugschneiden ungleichmäßig belastet werden. Auch leidet dadurch die Bearbeitungsgüte. Darüber hinaus sind Rüstzeiten von Bedeutung.

Es ist Aufgabe der Erfindung, die im Stand der Technik bekannten Spannvorrichtungen zu verbessern, insbesondere auch ein sicheres und präzises Spannen eines Werkzeugs oder auch eines Werkstücks wie auch ein schnelles Rüsten der Vorrichtung zu ermöglichen.

Diese Aufgabe wird gelöst durch eine Spannvorrichtung für ein Werkzeug oder Werkstück mit einer Zugspannzange und einem Kopplungselement, eine Zugspannzange für eine solche Spannvorrichtung und ein Kopplungselement für eine solche Spannvorrichtung sowie durch ein Verfahren zum Vorbereiten einer solchen Spannvorrichtung - mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die Spannvorrichtung, die Zugspannzange und das Kopplungselement sowie auch auf das Verfahren zum Vorbereiten der Spannvorrichtung.

Gegebenenfalls verwendete Begriffe, wie oben, unten, vorne, hinten, links oder rechts sowie innen oder außen sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrie- oder Drehachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die Spannvorrichtung für ein Werkzeug oder Werkstück mit einer Zugspannzange und einem Kopplungselement sieht einen ersten und einen zweiten Bajonett-Verschluss vor, unter Verwendung derer die Zugspannzange gegen das Kopplungselement verriegelbar und verspannbar ist.

Dabei sind der erste und der zweite Bajonett-Verschluss gleichzeitig in Eingriff bringbar.

D.h., anschaulich gesehen, erster und zweiter BajonettVerschluss bzw. deren Verschlusselemente sind derart angeordnet und ausgebildet, dass erster und zweiter (nur) gleichzeitig betätigbar sind.

Unter Verwendung des ersten Bajonett-Verschlusses ist die Zugspannzange gegen das Kopplungselement verriegelbar bzw. wird die Zugspannzange gegen das Kopplungselement verriegelt; unter Verwendung des zweiten Bajonett-Verschlusses ist die Zugspannzange gegen das Kopplungselement verspannbar bzw. wird die Zugspannzange gegen das Kopplungselement verspannt.

Nach dem Verfahren zum Vorbereiten einer Spannvorrichtung für ein Werkzeug oder Werkstück mit einer Zugspannzange und einem Kopplungselement ist vorgesehen, dass die Zugspannzange unter Aufbringung einer äußeren Kraft entgegen einer inneren Kraft relativ zu dem Kopplungselement axial verschoben, insbesondere unter Aufbringung einer äußeren Kraft auf die Zugspannzange in das Kopplungselement eingeschoben, wird, wobei gleichzeitig ein erster Bajonettverschluss und ein zweiter Bajonettverschluss teilbetätigt wird.

Dann wird die Zugspannzange unter der äußeren Kraft relativ zu dem Kopplungselement in eine vorgegebene Position, insbesondere in einen Anschlag bei dem ersten Bajonett-Verschluss, gedreht, beispielsweise um ca. 60°, wobei weiter gleichzeitig der erste Bajonett-Verschluss und der zweite BajonettVerschluss teilbetätigt wird.

Dann wird die äußere Kraft, insbesondere die äußere Kraft auf die Zugspannzange, zurückgenommen, wobei der erste BajonettVerschluss verriegelt wird und der zweite Bajonett-Verschluss verspannt wird.

Ist dann die Spannvorrichtung in dem Zustand, in dem der erste Bajonett-Verschluss verriegelt und der zweite BajonettVerschluss verspannt sind, so mag hier insbesondere der erste Bajonett-Verschluss axialkraftfrei gestellt sein. Axialkraftbelastet mag der zweite Bajonett-Verschluss sein.

Dabei mag unter "verriegelt" ein Zustand verstanden werden, bei dem zumindest ein vollständiges sich voneinander Lösen von zwei - mittels des Bajonett-Verschlusses - verbundenen Teilen verhindert ist. Hier - beispielsweise -, dass die Zugspannzange und das Kopplungselement - ohne Entriegelung - nicht "auseinanderfallen". In der "verriegelten Stellung" mögen auch weitere Relativbewegungen der zwei - mittels des Bajonett-Verschlusses - verbundenen Teile gesperrt sein, beispielsweise ein (Weiter-)- und/oder (Zurückdrehen-)Verdrehen der zwei - mittels des Bajonett-Verschlusses - verbundenen Teile gegeneinander. Diesbezüglich geeignete Bajonett-Verschlusselemente mögen Hinterschnitte sein.

Unter "verspannt" kann verstanden werden, dass Verschlusselemente des Bajonett-Verschlusses der zwei mittels des Bajonett-Verschlusses verbundenen Teile in kraftschlüssiger Verbindung miteinander stehen bzw. bringbar sind, über welche dann ein Kraftfluss geleitet wird (vgl. oben "axialkraftbelastet").

Ist dann - anschaulich ausgedrückt für die Spannvorrichtung - der zweite Bajonett-Verschluss verspannt bzw. axialkraftbelastet - und der erste Bajonett-Verschluss verriegelt und dabei axialkraftfrei gestellt, so kann alleine bzw. nur über den zweiten Bajonett-Verschluss die zur Einspannung des Werkzeugs bzw. Werkstücks führende (axiale) Zugkraft auf die Zugsspannzange geleitet werden. Der erste Bajonett-Verschluss bleibt - dadurch unbelastet - immer axialkraftfrei.

Von Vorteil erweist so insbesondere bei der Erfindung, dass die Verwendung zweier Bajonett-Verschlüsse, insbesondere bei gleichzeitiger Betätigung, schnelle Rüstzeiten (bzw. Wechselzeiten (der Zugspannzangen)) ermöglicht. Die Zugspannzange kann schnell und einfach - alleine mittels einer BajonettVerschluss-Bewegung (anstelle einer längerdauernden und komplexeren Verschraubung) - mit dem Kopplungselement verbunden bzw. gelöst werden. An einem die Spannzange aufnehmenden Grundkörper muss nichts gelöst oder demontiert werden.

Beim Entfernen der Zugspannzange muss diese lediglich mit einer Einführhilfe axial - entgegen der Verspannung durch den zweiten Bajonett-Verschluss (tiefer) - eingedrückt werden (, damit die Verriegelung des ersten Bajonett-Verschluss diese freigeben kann), dann gedreht - und wieder weiter dann axial "herausgenommen" -, was zur Sicherheit nur ohne Bauteil möglich ist. Ein Einsetzen einer neuen Zugspannzage geschieht in umgekehrter Reihenfolge und gemäß dem Verfahren.

Auch lassen sich durch die Erfindung kompakt bauende Spannvorrichtungen realisieren, welche sich darüber hinaus auch durch hohe Steifigkeit und geringe Schmutzempfindlichkeit auszeichnen.

Die Verwendung zweier Bajonett-Verschlüsse kann darüber hinaus insbesondere auch dazu führen, dass mehr kraftübertragende Fläche, beispielsweise an Spannschultern als Bajonett-Verschlusselementen, realisiert werden kann.

Darüber hinaus - trennt man die Verriegelung von der Kraftübertragung, wie hier durch die zwei Bajonett-Verschlüsse, -, so ermöglicht sich dadurch eine hoch genaue, definierte Zug/Spannkrafteinleitung.

Die erfindungsgemäße Spannvorrichtung kann auf vielen gängigen Maschinen mit Zugspannung eingesetzt werden. Eine Verwendung als Spannstocksystem ist wegen der kurzen Bauart ebenso möglich.

Die Zugspannzange - für eine Spannvorrichtung für ein Werkzeug oder Werkstück mit einer Zugspannzange und einem Kopplungselement - sieht ein zugspannzangenseitiges BajonettVerschluss-Element eines ersten Bajonett-Verschlusses und ein zugspannzangenseitiges Bajonett-Verschluss-Element eines zweiten Bajonett-Verschlusses vor.

Das zugspannzangenseitige Bajonett-Verschluss-Element des ersten Bajonett-Verschlusses ist ein Verriegelungsanschlag, beispielsweise in Form einer an ihrem einen Ende geschlossenen, insbesondere einen Hinterschnitt aufweisenden Quernut.

Das zugspannzangenseitige Bajonett-Verschluss-Element des zweiten Bajonett-Verschlusses ist eine zugspannzangenseitige gegen eine kopplungselementseitige kraftübertragende Spannschulter verspannbare kraftübertragende Spannschulter. Insbesondere kann an der Spannschulter eine Spannfläche vorgesehen sein, welche - bei der Kraftübertragung bzw. beim Kraftschluss - an einer (Gegen-)Spannfläche anliegt. Zweckmäßigerweise können hier Spannfläche und (Gegen-)Spannfläche zur vollständigen Überdeckung kommen.

Das Kopplungselement (insbesondere als komplementäres Gegenstück zu der Zugspannzange) - für eine bzw. die Spannvorrichtung für ein Werkzeug oder Werkstück mit einer Zugspannzange und einem Kopplungselement - sieht ein kopplungselementseitiges Bajonett-Verschluss-Element eines ersten BajonettVerschlusses und ein kopplungselementseitiges BajonettVerschluss-Element eines zweiten Bajonett-Verschlusses vor.

Das kopplungselementseitige Bajonett-Verschluss-Element des ersten Bajonett-Verschlusses ist ein Verriegelungselement, beispielsweise ein (Verriegelungs-/Einrast-)Bolzen, welcher insbesondere geeignet ist, im Verriegelungsanschlag bzw. in der Quernut aufgenommen zu werden.

Das kopplungselementseitige Bajonett-Verschluss-Element des zweiten Bajonett-Verschlusses ist eine kopplungselementseitige gegen eine zugspannzangenseitige kraftübertragende Spannschulter verspannbare kraftübertagende Spannschulter (, insbesondere auch mit der Spannfläche - s. oben).

So erweist es sich hier bei der Erfindung von besonderem Vorteil, dass insbesondere feinbearbeitete Spannschultern bzw. deren Spannflächen mit exaktem Planlauf für extrem hohe Rundlaufgenauigkeit sorgen. Hierbei erweist es sich als äußerst zweckmäßig, wenn die - aneinander anlegbaren - Spannflächen der gegeneinander verspannbaren Spannschultern in einer Ebene senkrecht zu einer Mittelachse der Spannvorrichtung bzw. Zugspannzange bzw. Kopplungselement liegen. Durch die Ausrichtung der Spannflächen senkrecht zur Mittelachse kann so erreicht werden, dass keine Radialkräfte an der Anlage der gegeneinander anliegenden Spannflächen auftreten - und so sich die Zugspannzange selbst zentrierend beim Einzug in den Grundkörper ausrichten kann. Ein hoher Rundlauf ist gewährleistbar.

Die Bajonett-Verschlüsse - insbesondere mit den Spannschultern - sorgen so auch für ein schnelles und sicheres Rüsten. Gerade in Bezug einer Fertigung kleiner Losgrößen mit automatischer Beladung entstehen große Vorteile.

Durch die hohe realisierte (Rundlauf-)Genauigkeit ist ein Einrichten vom Rundlauf bei der Spannvorrichtung nicht mehr nötig; dadurch entsteht auch Zeitersparnis.

Vorzugsweise ist das Kopplungselement eine Zughülse, d.h. insbesondere hülsenförmig. Dabei kann ein solches Element an einer Zugstange befestigt, beispielsweise verschraubt, oder einstückig mit einer Zugstange ausgebildet sein. Alternativ kann auch vorgesehen sein, dass das Koppelelement die Zugstange selbst oder ein Teil derselben ist.

Ferner kann bei der Spannvorrichtung auch ein eine Kraft stufenlos einstellbares Spann- bzw. Zugsystem, insbesondere ein hydraulisch und/oder pneumatisch wirkendes oder elektromechanisch betätigtes Spann- bzw. Zugsystem, vorgesehen sein.

Unter Verwendung eines solchen Spann- bzw. Zugsystems kann dann die Zugspannzange - über das - mit der Zugspannzange verbundene - Kopplungselement - (durch eine axiale Zugkraft) axial verschoben, d.h. beispielsweise in einen Grundkörper eingezogen, werden.

So kann es auch zweckmäßig sein, wenn eine Zugstange vorgesehen ist, welche einerseits mit dem Kopplungselement verbindbar bzw. verbunden ist, beispielsweise verschraubbar bzw. verschraubt ist, und andererseits mit dem Spann- bzw. Zugsystem verbindbar bzw. verbunden ist.

Weiterbildend erweist es sich als zweckmäßig, einen einen Innenkonus aufweisenden Grundkörper vorzusehen, in welchen die einen Außenkonus aufweisende Zugspannzange aufnehmbar ist.

Dazu kann dann wieder weiterbildend eine Rundlaufeinstellvorrichtung bei dem Grundkörper vorgesehen sein, beispielsweise Rundlaufschrauben - mittels welchen eine radiale Positionierung des Grundkörpers bzw. eines Teils des Grundkörpers möglich ist.

Ferner hat es sich als zweckmäßig erwiesen, wenn ein Konuswinkel des Innen- und/oder des Außenkonus zwischen 1° und 10°, insbesondere zwischen 2° und 3°, ganz bevorzugt ca. 2°30', ist. Durch derartig kleine Einstellwinkel kann eine - im Vergleich zu herkömmlichen größeren Einstellwinkeln - größere Spannkraft realisiert werden, was bei größeren Auskraglängen eine deutlich höhere Steifigkeit erzeugt. Darüber hinaus gewährleistet dies eine gute Selbsthemmung bei Störungen.

Zweckmäßig ist es insbesondere auch, wenn die - Schlitze aufweisende - Zugspannzange darüber hinaus Spreizelemente aufweist, welche die Zugspannzange im gelösten Zustand aus einem nicht gespreizten Zustand, insbesondere um einen maximalen radialen Aufweitungsweg von ca. 0,1 mm, aufspreizen.

Diesbezüglich erweist es sich weiter als vorteilhaft, wenn vorgesehen wird, dass der Konuswinkel des Außenkonus der Zugspannzange im nichtgespreizten Zustand dem Konuswinkel des Innenkonus des Grundkörpers entspricht und/oder die Kontur des Außenkonus der Zugspannzange auf einem gedachten geraden Kreiskegel liegt.

Heißt, die Spreizelemente sorgen für eine Aufweitung der im Nenndurchmesser des einzuspannenden Werkzeugs/Werkstücks gefertigten Zugspannzange im gelösten Zustand um ca. 0,1 mm, sodass ein sicherer automatischer Teilwechsel gewährleistet ist.

Zweckmäßig ist es ferner, wenn die Spreizelemente Elastomerfüllungen sind, insbesondere Elastomerfüllungen in den Schlitzen und/oder in mit den Schlitzen durchsetzten Bohrungen. Dieses kann auch Verschmutzungen in der Spannvorrichtung vorbeugen. Diese Bohrungen, zweckmäßigerweise (entsprechend den Schlitzen) beginnend an der werkzeug-/werkstückseitigen Stirnseite der Zugspannzange, - werden diese nicht ganz bis zur werkzeug-/werkstückseitigen Stirnseite der Zugspannzange gefüllt - können dann auch dazu verwendet werden, um die Einführhilfe anzusetzen.

Nach einer Weiterbildung kann auch vorgesehen sein, dass der zweite Bajonett-Verschluss gegeneinander spannbare, kopplungselementseitige und/oder zugspannzangenseitige Spannschultern aufweist, insbesondere mehrere, ganz im Besonderen drei, gleichmäßig über einen Umfang, insbesondere Innenumfang, des Kopplungselements und/oder mehrere, ganz im Besonderen drei, gleichmäßig über einen Umfang, insbesondere Außenumfang, der Zugspannzange verteilt angeordnete Spannschultern.

Die Spannkraft - zum Spannen des Werkzeugs oder Werkstücks - kann so bei der Spannvorrichtung über die Spannschulter/-n geleitet werden.

Weiter kann dann auch zweckmäßig sein, wenn aneinander anlegbare Spannflächen der gegeneinander verspannbaren Spannschultern des zweiten Bajonett-Verschlusses in einer Ebene senkrecht zu einer Mittelachse der Spannvorrichtung liegen, wobei bevorzugt dann auch weiter die aneinander anlegbaren Spannflächen der gegeneinander verspannbaren Spannschultern des zweiten Bajonett-Verschlusses derart an dem zweiten Bajonett-Verschluss ausgebildet und angeordnet sind, dass, wenn der erste Bajonett-Verschluss in der verriegelten Stellung ist, die aneinander anlegbaren Spannflächen weitestgehend komplett zur Deckung gelangen.

Durch die Ausrichtung der Spannflächen senkrecht zur Mittelachse kann so erreicht werden, dass keine Radialkräfte an der Anlage der gegeneinander anliegenden Spannflächen auftreten - und so sich die Zugspannzange selbst zentrierend beim Einzug in den Grundkörper ausrichten kann. Ein hoher Rundlauf ist dadurch gewährleistbar.

Auch kann vorgesehen werden, dass der erste BajonettVerschluss kopplungselementseitig mehrere, insbesondere drei gleichmäßig über einen Umfang verteilt angeordnete, Verriegelungselemente, beispielsweise (Einrast-/Verriegelungs)Bolzen, aufweist und/oder zugspannzangenseitig mehrere, insbesondere drei gleichmäßig über einen Umfang verteilt angeordnete, Verriegelungsanschläge, beispielsweise jeweils in Form einer an ihrem einen Ende geschlossenen, insbesondere einen Hinterschnitt aufweisenden, Quernut.

Auch ist es zweckmäßig, wenn ein auf die Zugspannzange wirkender Spannmechanismus vorgesehen ist, welche so die Verspannung des zweiten Bajonett-Verschlusses bzw. dessen Spannschultern/Spannflächen gegeneinander bewirken kann. Diese kann vorzugsweise in Form eines federbelastbaren bzw. federbelasteten Druckrings, welcher an dem der werkzeug-/werkstückseitigen Stirnseite der Zugspannzange gegenüberliegenden Ende der Zugspannzange anliegen bzw. angreifen kann, realisiert sein.

Diese Feder kann so auch die innere Kraft bewirken, gegen welche die Zugspannzange unter Aufbringung der äußeren Kraft axial verschoben wird - und welche bei Zurücknahme der äußeren Kraft die Verspannung des zweiten Bajonett-Verschlusses aufrechterhält.

Insbesondere ist es auch zweckmäßig, wenn ein Kraftfluss einer die Zugspannzange axial einziehenden Spann-/Zugkraft über einen biegeelastischen Bereich geführt wird, welcher insbesondere andererseits des Aufnahmebereichs für das Werkzeug oder das Werkstück der Zugspannzange nach dem zweiten Bajonett-Verschluss, aber in Nähe des zweiten BajonettVerschlusses, ausgebildet ist, beispielsweise an der Zugstange.

Hier kann dann weiter vorgesehen sein, dass der biegeelastische Bereich balgartig, insbesondere faltenbalgartig, und/oder in/an der Zugstange ausgebildet ist.

Dieser biegeelastische Bereich - beispielsweise an der Zugstange - sorgt insbesondere dafür, dass sich die (axialen) Zugkräfte (beim Spannen eines Werkzeugs oder Werkstücks) gleichmäßig auf die Spannflächen bzw. Spannschultern (des zweiten Bajonett-Verschlusses) verteilen - und so auch für den selbstzentrierten Einzug der Zugspannzange sorgen können.

Ferner kann auch mindestens eine Längsnut vorgesehen sein, welche ein gemeinsames zugspannzangenseitiges Bajonett-Verschlusselement des ersten und des zweiten BajonettVerschlusses bilden kann.

Zweckmäßig erweist sich auch, wenn der Verriegelungsanschlag einen Endanschlag bei einer einen Hinterschnitt aufweisenden Quernut an der Zugspannzange aufweist.

Weiterbildend kann auch vorgesehen sein, dass das Kopplungselement eine Zughülse, insbesondere eine an einer Zugstange befestigbare oder einstückig mit einer Zugstange ausgebildete Zughülse ist, insbesondere eine Zughülse mit innenseitig der Zughülse angeordneten kopplungselementseitigen Bajonett-Verschlusselementen des ersten und/oder zweiten Bajonettverschlusses.

Auch kann das Kopplungselement eine Zugstange sein, insbesondere eine Zugstange mit außenseitig der Zugstange angeordneten kopplungselementseitigen Bajonett-Verschlusselementen des ersten und/oder zweiten Bajonett-Verschlusses.

Bevorzugt kann auch vorgesehen sein, dass die zugspannzangenseitigen Bajonett-Verschlusselemente des ersten und/oder zweiten Bajonettverschlusses an einer innenseitigen Umfangsfläche der Zugspannzange oder an einer außenseitigen Umfangsfläche der Zugspannzange angeordnet sind.

Weiterhin kann es zweckmäßig sein, wenn die Zugspannzange eine Aufnahmeöffnung, insbesondere eine zylindrische Aufnahmeöffnung, vorsieht zur Aufnahme eines zu spannenden Werkzeugs oder Werkstücks, insbesondere eines zylindrischen Werkstücks oder eines einen zylindrischen Schaft aufweisenden Werkzeugs.

Auch hat es sich als zweckmäßig erwiesen, wenn die Zugspannzange eine Schulter oder Ähnliches vorsieht, welche - wird die Zugspannzange in den Grundkörper gezogen - dort gegen einen komplementären Anschlag bzw. Schulter am Grundkörper stößt. D.h., es wird eine Begrenzung eines maximalen axialen Einzugs zur Verfügung gestellt, welche so insbesondere im Falle eines Leereinzugs der Zugspannzange (d.h. ohne Werkzeug/Werkstück) deren Beschädigung verhindern kann.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIGen 1a und b: Ansichten einer Spannvorrichtung für ein Werkzeug oder Werkstück mit einer Zugspannzange und einem Kopplungselement gemäß einer erfindungsgemäßen Ausführung,

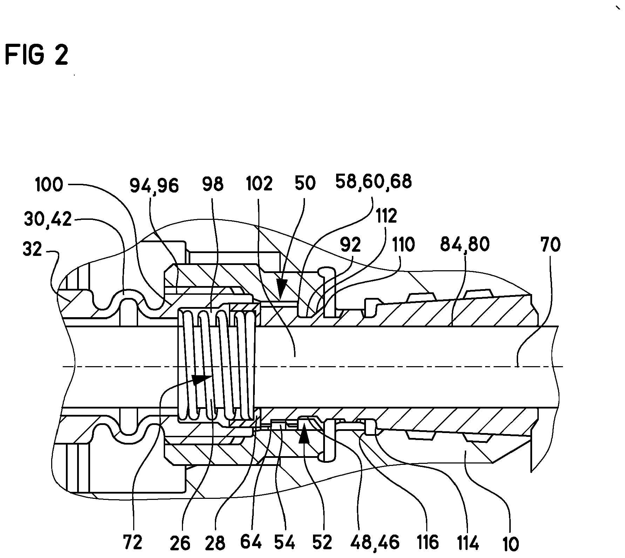

- FIG 2: eine Detailansicht der Spannvorrichtung für ein Werkzeug oder Werkstück mit einer Zugspannzange und einem Kopplungselement gemäß einer erfindungsgemäßen Ausführung und
- FIGen 3a, b, c und d: Ansichten einer Zugspannzange gemäß einer erfindungsgemäßen Ausführung.

### - (Präzisions-)Spannvorrichtung mit Zugspannzange und Kopplungselement mit Doppelbajonett (für Werkzeuge oder Werkstücke) (FIGen 1 bis 3)

FIG 1 (mit den Einzeldarstellungen FIG 1a und FIG 1b) zeigt eine Spannvorrichtung 2 zum Spannen eines Werkzeugs (oder auch Werkstücks). FIG 2 zeigt einen Detailausschnitt dieser Spannvorrichtung 2, welcher insbesondere eine Zugspannzange 4 und ein Kopplungselement 6 der Spannvorrichtung 2 näher im Detail zeigt. Die Zugspannzange 4 ist dann auch in der FIG 3 (mit den Einzeldarstellungen FIGen 3a bis d) gezeigt.

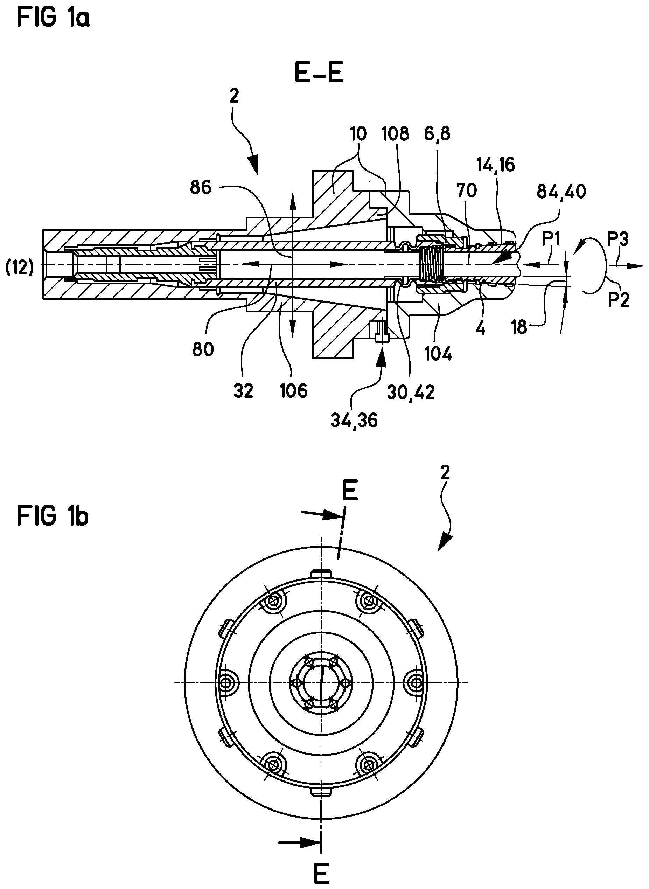

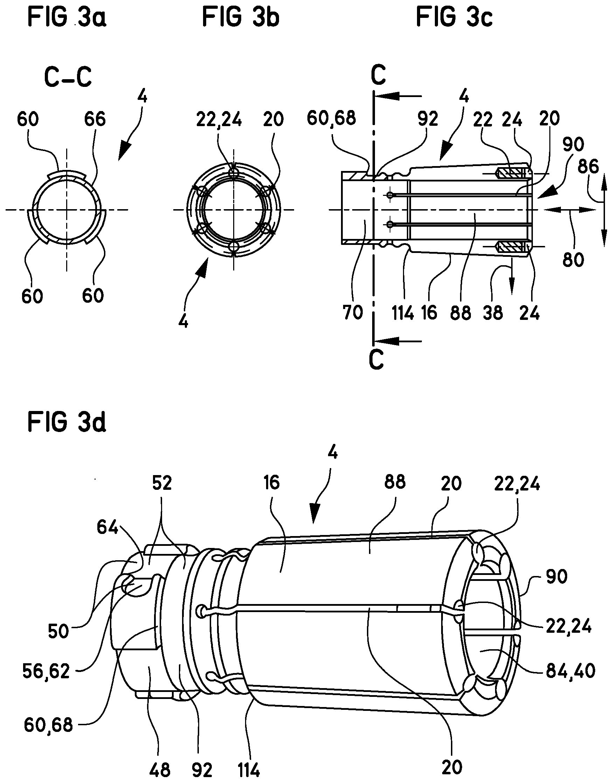

Die Spannvorrichtung 2 - ein Zugspannsystem - sieht, wie FIG 1 verdeutlicht, eine im wesentlichen hülsenförmige Zugspannzange 4 (vgl. FIG 3) mit zylindrischem Innenmantel 84 und im wesentlichen konischem Außenmantel 16 - kurz auch Außenkonus 16 -, die mit ihrem verjüngten Ende voraus in eine zur Dreh/Mittelachse 70 zentrische ebenfalls konische Aufnahmeöffnung/-bohrung 14 - kurz auch Innenkonus 14 - eines Grundkörpers 10 der Spannvorrichtung eingesetzt wird bzw. ist (vgl. auch FIG 2).

Im zylindrischen Innenmantel (Aufnahmeöffnung) 84 der Zugspannzange 4 wird ein Werkzeug bzw. ein zylindrischer Schaft des Werkzeugs gespannt (nicht gezeigt).

Mit der Zugspannzange 4 verbunden ist, wie auch insbesondere FIG 2 zeigt, ein - als (hülsenförmige) Zughülse 8 ausgebildetes - Kopplungselement 6, welches selbst wiederum mit einer Zugstange 32 verbunden, hier verschraubt, ist, an welcher ein (nicht näher gezeigtes, beispielsweise hydraulisches) Spann-/Zugsystem (12) zum Spannen der Spannvorrichtung bzw. zum Klemmen des Werkzeugs (in der Aufnahmeöffnung) angreift. Dazu sieht die Zugstange 32 an dem werkzeugseitig abgewandten Ende eine ein Innengewinde aufweisende Bohrung vor, über welches das Spann-/Zugsystem (12) mit der Zugstange 32 verschraubbar ist.

Zugspannzange 4, Kopplungselement 6 bzw. Zughülse 8 und Zugstange 32 sind, wie FIG 1 zeigt, in dem Grundkörper 10 angeordnet.

Wesentlich ist, wie insbesondere FIG 2 verdeutlicht, die Verbindung zwischen der Zugspannzange 4 und dem Kopplungselement 6 bzw. der Zughülse 8, welche mittels - im Folgenden näher beschriebener - zweier Bajonett-Verschlüsse 50, 52 (kurz auch nur Bajonett) realisiert ist.

(Im Folgenden näher beschriebene) Bajonett-VerschlussElemente der beiden Bajonette 50, 52 bzw. des ersten 50 und des zweiten Bajonetts 52 befinden sich so an der Zugspannzange 4 (hier außenseitig 48 bzw. am Außenumfang 48) und dem Kopplungselement 6 bzw. der Zughülse 8 (hier innenseitig 46 bzw. am Innenumfang 46).

Unter Verwendung des ersten Bajonetts 50 wird die Verbindung von Zugspannzange 4 und Kopplungselement 6 verriegelt; unter Verwendung des zweiten Bajonetts 52 wird die Verbindung von Zugspannzange 4 und Kopplungselement 6 verspannt.

### Zugspannzange

Die Zugspannzange 4 ist, wie FIG 3 zeigt, durch eine Vielzahl (hier sechs) in Umfangsrichtung gleichmäßig verteilt angeordneter, axial verlaufender Schlitze 20, die die Zugspannzange 4 radial 86 durchdringen, in eine Vielzahl (hier entsprechend sechs) Zungen 88 unterteilt. Die Schlitze 20 sind lediglich an einem ihrer Längsenden geschlossen und an ihrem anderen Längsende - zur der dem Werkzeug zugewandten Stirnseite/- kante 90 der Zugspannzange 4 - offen, wodurch die Zugspannzange 4 sich aufspreizen kann.

Wie weiter insbesondere FIG 3 zeigt, sieht die Zugspannzange 4 ferner auch eine (hier entsprechend der Anzahl der Schlitze 20) Vielzahl (hier so entsprechend auch sechs) in Umfangsrichtung gleichmäßig verteilt angeordnete, axial 80 verlaufende (Sack-)Bohrungen 24 vor, welche - wie die Schlitze 20 - auch lediglich an einem Längsende geschlossen und an ihrem anderen Längsende - zur der dem Werkzeug zugewandten Stirnseite/-kante 90 der Zugspannzange 4 - offen sind.

Die Bohrungen 24 sind so in der Zugspannzange 4 angeordnet, dass sie durch die Schlitze 20 durchsetzt sind.

Der Konuswinkel 18 des Außenkonus 16 der Zugspannzange 4 entspricht im nichtgespreizten Zustand dem Konuswinkel 18 des Innenkonus 14 des Grundkörpers 10 - und sieht hier ca. 2°30' vor.

Wird so - beim Spannen des Werkzeugs - die - geschlitzte - Zugspannzange 4 mittels des Spann-/Zugsystems (12) mit ihrem Außenkonus 16 in den Innenkonus 14 des Grundkörpers 10 hineingezogen, wird das mit seinem zylindrischen Schaft in die Zugspannzange 4 eingesteckte bzw. das mit seinem zylindrischen Schaft im zylindrischen Innenmantel 84 der Zugspannzange 4 aufgenommene Werkzeug hierbei radial 86 gespannt/- klemmt. Der Durchmesser der Aufnahmeöffnung 84 der Zugspannzange 4 ist dabei so bemessen, dass er im gespannten Zustand dem Außendurchmesser des eingespannten Werkzeugs/Werkstücks entspricht und/oder der Außenmantel 16 der Zugspannzange 4 in Flächenkontakt mit dem Innenkonus 14 des Grundkörpers 10 anliegt.

Die axiale 80 Erstreckung der Bohrungen 24 ist, wie FIG 3 zeigt, kürzer als die der Schlitze 20, hier beispielsweise in etwa ein Viertel der Schlitzlänge.

Die Bohrungen 24 sind - beginnend von Bohrungsgrund nicht ganz bis zur Stirnseite/-kante 90 der Zugspannzange 4 - mit einem Elastomer 22 derart gefüllt, dass sich die Zugspannzange 4 - wegen der die Bohrungen 24 durchsetzenden Schlitze 20 - aufweitet. D.h., es ist im Querschnitt mehr Elastomer 22 in den Bohrungen 24 verfüllt als der Bohrungsdurchmesser nichtgespreizt aufnehmen kann.

Anschaulich gesehen, bilden sich so - durch das Elastomer 22 - in den Bohrungen 24 bzw. durch die mit Elastomer 22 gefüllten Bohrungen 24 Spreizelemente 22 an der Zugspannzange 4 aus, welche die Zugspannzange 4 im gelösten Zustand aus dem nichtgespreizten Zustand (hier beispielsweise) um einen maximalen radialen 86 Aufweitungsweg 38 von ca. 0,1 mm aufspreizen.

Heißt, die Spreizelemente 22 sorgen für eine Aufweitung der im Nenndurchmesser des einzuspannenden Werkzeugs/Werkstücks gefertigten Zugspannzange 4 im gelösten Zustand um ca. 0,1 mm -, sodass ein sicherer automatischer Teilwechsel gewährleistet ist.

Die mit Elastomer 22 gefüllten Bohrungen 24 sorgen so auch für Schutz vor Verschmutzung, wie sie so auch - sind sie nicht bis an die Stirnseite/-kante 90 gefüllt - Ansatz für einen Montageschlüssel (Einführhilfe - nicht gezeigt) zum Montieren/Wechsel/Einführen der Zugspannzange 4 bilden.

An ihrem der Aufnahmeöffnung 84 bzw. Aufnahmebereichs 40 für das Werkzeug gegenüberliegenden Ende der Zugspannzange 4 sind, wie insbesondere FIG 3 zeigt, die Bajonett-VerschlussElemente des ersten und des zweiten Bajonetts 50,52 angeordnet - und zwar am dortigen Außenumfang 48.

Komplementäre kopplungselement- bzw. zughülsenseitige Bajonett-Verschluss-Elemente des ersten und des zweiten Bajonetts 50, 52 sind, wie FIGen 2 und 3 verdeutlichen, am Innenumfang 46 des Kopplungselements 6 bzw. der Zughülse 8 angeordnet, so dass diese beim Einschieben der Zugspannzange 4 in das (hülsenförmige) Kopplungselement 6 bzw. Zughülse 8 in Eingriff gelangen können - und das erste 50 und das zweite Bajonett 52 dadurch verschlossen werden kann.

Wesentliche zugspannzangenseitige Bajonett-VerschlussElemente des ersten Bajonett-Verschlusses 50 sind, wie FIG 3 zeigt, - in diesem Fall - drei über den Umfang gleichmäßig verteilte - Verriegelungsanschläge 56, in Form dreier jeweils an ihrem einen Ende geschlossene, einen Hinterschnitt 64 aufweisende und Anschlag bildende Quernuten 62.

Weiter als zugspannzangenseitige Bajonett-Verschluss-Elemente des ersten Bajonetts 50 sind drei (entsprechend zugehörig zu den drei Quernuten 62) - an die jeweilige Quernut 62 angebundene - über den Außenumfang 48 der Zugspannzange 4 gleichmäßig verteilte, an der werkzeugseitig abgewandten Stirnseite 90 der Zugspannzange 4 beginnende Längsnuten 66 vorgesehen.

Diese drei Längsnuten 66 - als zugspannzangenseitige Bajonett-Verschluss-Elemente des ersten Bajonetts 50 - bilden gleichzeitig auch zugspannzangenseitige Bajonett-VerschlussElemente des zweiten Bajonetts 52.

Weitere zugspannzangenseitige Bajonett-Verschluss-Elemente des zweiten Bajonett-Verschlusses 52, welche sich - ähnlich der Quernuten 62 - an die Längsnuten 66 "anschließen", sind drei jeweils Spannschultern 60 - mit entsprechenden Spannflächen 68 - ausbildende "Quernuten".

Sind, wie FIG 3 auch zeigt, diese drei Quernuten an ihren Nutenden jeweils offen, so bilden die drei Quernuten eine umlaufende Ringnut 92 an der Außenseite 48 der Zugspannzange 4 aus.

Dabei ist die Erstreckung - in Umfangsrichtung - der "gemeinsamen" Längsnuten 66 (von erstem 50 und zweiten Bajonett 52) jeweils geringfügig größer als Spannschultern 58 am Kopplungselement 6 bzw. an der Zughülse 8, so dass die Spannschultern 58 des Kopplungselements 6 bzw. der Zughülse 8 in bzw. durch die Längsnuten 66 an der Zugspannzange 4 durchschiebbar sind.

Die Spannflächen 68 der Spannschultern 60 der Zugspannzange 4 (wie auch solche 68/58 des Kopplungselements 6 bzw. der Zughülse 8) liegen in einer Ebene senkrecht zu einer Mittelachse 70 der Zugspannzange 4 (gleich der Mittelachse 70 des Kopplungselements 6 bzw. der Spannvorrichtung 2). Solche - zugspannzangenseitige und kopplungselementseitige - Spannflächen 68 bzw. Spannschultern 58/60 werden, wie insbesondere FIG 2 zeigt und nachfolgend näher beschrieben wird, paarweise verspannt.

### Kopplungselement

Die den zugspannzangenseitigen Bajonett-Verschluss-Elementen des ersten 50 und des zweiten Bajonetts 52 entsprechenden komplementären "Gegenelemente" des Kopplungselements 6 bzw. der Zughülse 8 befinden sich, wie den FIGen 1 und 2 zu entnehmen ist, am Innenumfang 46 des Kopplungselements 6 bzw. der Zughülse 8.

Hier verdeutlichen die FIGen 1 und 2, dass am werkzeugseitigen Ende, innenseitig 46 des Kopplungselements 6 bzw. der Zughülse 8 diese den zugspannzangenseitigen BajonettVerschluss-Elementen des ersten 50 und des zweiten Bajonetts 52 entsprechende "Gegenelemente" angeordnet sind.

Wesentliche kopplungselementseitige Bajonett-VerschlussElemente des ersten Bajonetts 50 sind drei über den Innenumfang des Kopplungselements 6 bzw. der Zughülse 8 gleichmäßig verteilte, radial 86 nach innen ragende - Verriegelungsbolzen 54.

Als kopplungselementseitige Bajonett-Verschluss-Elemente des zweiten Bajonett-Verschlusses 52 sind drei Spannschultern 58 - mit entsprechenden Spannflächen 68 - am Innenumfang 46 des Kopplungselements 6 bzw. der Zughülse 8 angeordnet.

Auch diese Spannflächen 68 an den Spannschultern 58 des Kopplungselements 6 bzw. der Zughülse 8 liegen in einer Ebene senkrecht zu einer Mittelachse 70 des Kopplungselements 6 (gleich der Mittelachse 70 der Zugspannzange 4 bzw. der Spannvorrichtung 2).

Während die kopplungselementseitigen Spannflächen 68 des zweiten Bajonetts 52 werkzeugseitig abgewandt an der jeweiligen Spannschulter 58 angeordnet/ausgebildet sind, sind die komplementären zugspannzangenseitigen Spannflächen 68 jeweiliger dortiger Spannschultern 60 werkzeugseitig an der jeweiligen Spannschulter 60 angeordnet - , wodurch sich die Spannschultern 60/58 von Zugspannstange 4 und Kopplungselement 6 bzw. Zughülse 8 - jeweils paarweise über ihre jeweiligen Spannflächen 68 verspannen lassen.

Dabei ist die Erstreckung - in Umfangsrichtung - der kopplungselementseitigen Spannschultern 58 gleich der der zugspannzangenseitigen Spannschultern 60 (entsprechendes gilt so auch für die Spannflächen 68), so dass - gegeneinander verspannbare - Spannschultern 60/58 von Zugspannzange 4 und Kopplungselement 6 bzw. Zughülse 8 bzw. deren Spannflächen 68 - bei Verschluss des zweiten Bajonetts 52 - zur vollständigen Überdeckung gelangen können.

Wie FIGen 1 und 2 auch verdeutlichen, ist am werkzeugseitig abgewandten Ende des Kopplungselements 6 bzw. der Zughülse 8, ebenfalls innenseitig 46 des Kopplungselements 6 bzw. der Zughülse 8 ein Innengewinde 94 eingebracht, mittels welchem das Kopplungselement 6 bzw. die Zughülse 8 mit der Zugstange 32 verschraubbar ist.

Dazu ist, wie insbesondere FIG 2 zeigt, ein entsprechendes Außengewinde 96 am Außenumfang 48 des werkzeugseitigen Endes der Zugspange 4 aufgebracht.

### Spannmechanismus zur Verspannung des zweiten Bajonetts

Mittels eines - zwischen Zugstange 32 und Kopplungselement 6 eingebrachten - Spannmechanismus 72 kann bzw. wird das zweite Bajonett 52 verspannt.

Dazu sieht die Zugstange 32, wie insbesondere FIG 2 zeigt, - an seinem werkzeugseitigen Ende - eine Aufnahmeöffnung 98 vor, in welche eine (Spann-)Feder 26 eingelegt werden kann bzw. wird.

Innerhalb dieser Aufnahmeöffnung 98 stützt sich die Feder 26 an einer umlaufenden Schulter 100 in der Aufnahmeöffnung 98 der Zugstange 32 ab. Die Feder 26 ragt im ungespannte Zustand - ist sie in die Aufnahmeöffnung 98 eingelegt und stützt sich dort gegen die Schulter 100 ab - axial 80 über die Zugstange 32 ca. hälftig ihrer (axialen) Länge hinaus.

Werkzeugseitig auf die Feder 26 ist ein Druckring 28 aufgelegt, welcher - wird das Kopplungselement 6 bzw. Zughülse 8 mit der Zugstange 32 verschraubt - in die innere Durchgangsöffnung 102 des Kopplungselements 6 bzw. der Zughülse 8 eintaucht.

An innenseitig 46 des Kopplungselements 6 angeordneten radialen Verriegelungsbolzen 54 (vgl. obig zum Kopplungselement 6 bzw. später zum ersten Bajonett 50) kann sich der Druckring 28 abstützen (hier ist die Zugspannzange noch nicht das Kopplungselement 6 bzw. Zughülse 8 eingeschoben), so dass - wird das Kopplungselement 6 bzw. Zughülse 8 mit der Zugstange 32 verschraubt - die Feder 26 zusammengedrückt und vorgespannt wird.

Durch die Durchgangsöffnung 102 des hülsenförmigen Kopplungselements 6 bzw. der Zughülse 8 kann die Feder 26 - über ihren Druckring 28 - weiter axial 80 gespannt werden, wie dies bei dem Schließen der Bajonette 50,52 bzw. beim Verspannen des zweiten Bajonetts 52 der Fall ist.

Hier drückt dann - wird die Zugspannzange 4 in das Kopplungselement 6 eingeschoben - die werkzeugseitig abgewandte Stirnseite der Zugspannzange 4 auf den Druckring 28 - und verschiebt ihn gegen die Federkraft (weiter) axial 80 (, wodurch sich der Druckring 28 von den Verriegelungsbolzen 54 löst).

Diese Federkraft bewirkt - sind die zwei Bajonetts 50, 52 verschlossen -, dass das zweite Bajonett 52 verspannt (hier sind die zugspannzangenseitigen und kopplungselementseitigen Spannflächen 68 der Spannschultern 60, 58 jeweils paarweise durch die Federkraft gegeneinander verspannt) und das erste Bajonett 50 dabei aber axial 80 kraftfrei gestellt ist (hier befinden sich die Verriegelungsbolzen 54 jeweils "axial frei" in den Verriegelungsanschlägen 56 bzw. Quernuten 62).

### Zugstange

Wie insbesondere auch FIG 2 zeigt, ist weiter auch an der Zugstange 32 - werkzeugseitig zugewandt - unmittelbar hinter dem aufgeschraubten Kopplungselement 6 bzw. Zughülse 8 ein - als faltenbalgartiger Bereich 30 ausgebildeter - elastischer Bereich 30 ausgebildet.

Erfolgt ein Kraftfluss einer die Zugspannzange 4 axial 80 einziehenden Spann-/Zugkraft über diesen biegeelastischen Bereich 30, kann sich dieser elastische Bereich 30 derart verformen, dass sich die (axialen) Zugkräfte (beim Spannen eines Werkzeugs) gleichmäßig auf die Spannflächen 68 bzw. Spannschultern 58, 60 (des zweiten Bajonetts 52) verteilen - und so für einen selbstzentrierten Einzug der Zugspannzange 4 sorgen.

### Grundkörper

Wie auch weiter FIG 1 verdeutlicht, sieht der Grundkörper 10 eine Rundlaufeinstellvorrichtung 34 vor.

Dazu ist der Grundkörper 10 zweigeteilt - mit einem dem Werkzeug/Werkstück zugewandten "vorderen" ersten Teilkörper 104 und einem sich daran anschließenden zweiten Teilkörper 106.

Der erste Teilkörper 104 ist auf einem Anschlussflansch 108 des zweiten Teilkörpers 106 aufgesetzt - und kann mittels Rundlaufeinstellschrauben 36 radial 86 positioniert werden.

Wie weiter auch insbesondere FIG 2 entnommen werden kann sieht der Grundkörper 10 eine radial nach innen ragende - in diesem Fall segmentartig umlaufend unterbrochene - als Anschlag dienende Schulter 116 vor. Entsprechend komplementär - ist an der Zugspannzange 4 eine (Anschlags-)Schulter 114 angeordnet.

Wird so die Zugspannzange 4 in den Grundkörper 10 gezogen, können beide Schultern 114/116 in Anschlag gelangen. D.h., es wird so eine Begrenzung eines maximalen axialen Einzugs der Zugspannzange 4 zur Verfügung gestellt, welche so insbesondere im Falle eines Leereinzugs der Zugspannzange 4 in den Grundkörper 10 (d.h. ohne Werkzeug/Werkstück) deren Beschädigung verhindern kann.

### Einsetzen der Zugspannzange und Betätigung der Bajonette

Soll - beispielsweise - eine neue Zugspannzange 4 in die Spannvorrichtung 2 eingesetzt werden (, wobei die alte Zugspannzange 4 zuvor aus der Spannvorrichtung 2 entfernt wurde), so erfolgt dies wie die Pfeile P1, P2 und P3 in FIG 1 verdeutlichen, wie folgt.

Beim Einsetzen der Zugspannzange 4 in den Grundkörper 10 wird die Zugspannzange 4 unter Aufbringung einer äußeren Kraft (beispielsweise mittels der aufgesteckten Einführhilfe (diese nicht gezeigt)) entgegen der Federkraft des Spannmechanismus 72 (s. oben) relativ zu dem Kopplungselement 6 bzw. Zughülse 8 axial verschoben bzw. in das Kopplungselement 6 bzw. Zughülse 8 eingeschoben (vgl. P1 in FIG 1).

Hier werden gleichzeitig die kopplungselementseitigen Spannschultern 58 des zweiten Bajonetts 52 und die kopplungselementseitigen Verriegelungsbolzen 54 des zweiten Bajonetts 52 in die zugspannzangenseitigen gemeinsamen Längsnuten 66 (zugehörig dem ersten 50 und dem zweiten Bajonett 52) ein- bzw. durchgeschoben.

Das axiale Einschieben der Zugspannzange 4 in das Kopplungselement 6 bzw. Zughülse 8 - in eine vorbestimmte Position - wird durch eine äußere Schulter 110 an der Zugspannzange 4 begrenzt, an welche die Spannschultern 58 des Kopplungselements 6 bzw. der Zughülse 8 mit ihren werkzeugseitigen Begrenzungsflächen 112 anschlagen.

Wird dann die Zugspannzange 4 unter der äußeren Kraft (Einführhilfe) relativ zu dem Kopplungselement um ca. 60° gedreht (vgl. P2 in FIG 1), so gelangen die Verriegelungsbolzen 54 des ersten Bajonetts 50 - geschoben über die Hinterschnitte 64 - in die Anschläge der Quernuten 62 des ersten Bajonetts 50.

Gleichzeitig gelangen die - zugspannzangenseitigen und kopplungselementseitigen - Spannschultern 60, 58 bzw. deren Spannflächen 68 des zweiten Bajonetts 52 (paarweise) in vollständige Überdeckung - jedoch noch ohne, dass die Spannschultern 60, 58 bzw. die Spannflächen 68 des zweiten Bajonetts 52 aneinander anliegen.

Dann wird die äußere Kraft auf die Zugspannzange 4 zurückgenommen (, wobei die Federkraft des Spannmechanismus 72 dann die Zugspannzange 4 axial 80 verschiebt) (vgl. P3 in FIG 1), so dass sich das erste Bajonett 50 verriegelt, dadurch, dass die Verriegelungsbolzen 54 des ersten Bajonetts 50 in die Hinterschnitte 64 gelangen - und sich (durch die Federkraft des Spannmechanismus 72) das zweite Bajonett 52 verspannt, indem die Spannschultern 58,60 des zweiten Bajonetts 52 bzw. deren Spannschultern 68 - unter Druckbelastung durch den Spannmechanismus 72 - in Anlage gelangen.

Ist dann die Spannvorrichtung 2 in dem Zustand, in dem das erste Bajonett 50 verriegelt und das zweite Bajonett 52 verspannt sind, so ist das erste Bajonett 50 axialkraftfrei und das zweite Bajonett 52 unter Vorspannung.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Spannvorrichtung
- 4: Zugspannzange
- 6: Kopplungselement, Zughülse
- 8: Zughülse
- 10: Grundkörper, Spannkörper

- 12: (hydraulisches/pneumatisches/elektromechanisches) (stufenlos einstellbares) Spann-/Zugsystem
- 14: Innenkonus, konische Aufnahmeöffnung/-bohrung
- 16: Außenkonus, Außenmantel
- 18: Konuswinkel
- 20: Schlitz

- 22: Spreizelement, Elastomerfüllung
- 24: Bohrung
- 26: Feder, federbelastet
- 28: Druckring
- 30: biegeelastischer Bereich, (falten-)balgartiger Bereich

- 32: Zugstange
- 34: Rundlaufeinstellvorrichtung
- 36: Rundlaufeinstellschraube
- 38: Aufweitungsweg
- 40: Aufnahmebereich

- 42: (Falten-)Balg, (falten-)balgartig
- 46: innenseitig, Innenumfang
- 48: außenseitig, Außenumfang
- 50: erster Bajonett-Verschluss (Verriegelung)

- 52: zweiter Bajonett-Verschluss (Verspannung)
- 54: kopplungselementseitiges Bajonett-Verschluss-Element des ersten Bajonett-Verschlusses, Verriegelungselement, Einrastbolzen
- 56: zugspannzangenseitiges Bajonett-Verschluss-Element des ersten Bajonett-Verschlusses, Verriegelungsanschlag, Endanschlag
- 58: kopplungselementseitiges Bajonett-Verschluss-Element des zweiten Bajonett-Verschlusses, Spannschulter

- 60: zugspannzangenseitiges Bajonett-Verschluss-Element des zweiten Bajonett-Verschlusses, Spannschulter

- 62: Quernut
- 64: Hinterschnitt
- 66: Längsnut, (gemeinsames zugspannzangenseitiges BajonettVerschlusselement)
- 68: Spannfläche
- 70: Mittelachse

- 72: Spannmechanismus
- 80: axial, Axialrichtung

- 84: (zylindr.) Innenmantel, Aufnahmeöffnung
- 86: radial, Radialrichtung
- 88: Zunge
- 90: Stirnseite/-kante

- 92: Ringnut
- 94: Innengewinde
- 96: Außengewinde
- 98: Aufnahmeöffnung (für Feder 26)
- 100: (umlaufende) Schulter

- 102: innere Durchgangsöffnung des Kopplungselements 6
- 104: erster Teilkörper
- 106: zweiter Teilkörper
- 108: Anschlussflansch
- 110: (äußere) Schulter

- 112: Begrenzungsfläche
- 114: (Anschlag-)Schulter
- 116: (Anschlags-)Schulter

- P1, P2, P3: Pfeile

## Patentansprüche

1. Spannvorrichtung für ein Werkzeug oder Werkstück mit einer Zugspannzange und einem Kopplungselement,
**gekennzeichnet, durch**
einen ersten und einen zweiten Bajonett-Verschluss, unter Verwendung derer die Zugspannzange gegen das Kopplungselement verriegelbar und verspannbar ist, wobei der erste und der zweite Bajonett-Verschluss gleichzeitig in Eingriff bringbar sind, wodurch unter Verwendung des ersten BajonettVerschlusses die Zugspannzange gegen das Kopplungselement verriegelbar ist und unter Verwendung des zweiten BajonettVerschlusses die Zugspannzange gegen das Kopplungselement verspannbar ist.

2. Spannvorrichtung nach einem der voranstehenden Ansprüche, **dadurch gekennzeichnet, dass**
das Kopplungselement eine Zughülse, insbesondere eine an einer Zugstange befestigte oder einstückig mit einer Zugstange ausgebildete Zughülse, oder eine Zugstange ist.

3. Spannvorrichtung nach einem der voranstehenden Ansprüche, **gekennzeichnet, durch**
ein eine Kraft stufenlos einstellbares Spannsystem, insbesondere ein hydraulisch und/oder pneumatisch wirkendes oder elektromechanisch betätigtes Spannsystem, unter Verwendung dessen die Zugspannzange über das Kopplungselement axial verschiebbar ist und/oder eine mit dem Kopplungselement verschraubbare Zugstange, welche insbesondere mit dem Spannsystem verbindbar ist.

4. Spannvorrichtung nach einem der voranstehenden Ansprüche, **gekennzeichnet, durch**
einen einen Innenkonus aufweisenden Grundkörper, in welchen die einen Außenkonus aufweisende Zugspannzange aufnehmbar ist, insbesondere einen eine Rundlaufeinstellvorrichtung aufweisenden Grundkörper.

5. Spannvorrichtung nach einem der voranstehenden Ansprüche, **dadurch gekennzeichnet, dass**
ein Konuswinkel des Innen- und/oder des Außenkonus zwischen 1° und 10°, insbesondere zwischen 2° und 3°, ganz bevorzugt ca. 2°30', ist.

6. Spannvorrichtung nach einem der voranstehenden Ansprüche, **dadurch gekennzeichnet, dass**
die Schlitze aufweisende Zugspannzange Spreizelemente aufweist, welche die Zugspannzange im gelösten Zustand aus einem nicht gespreizten Zustand, insbesondere um einen maximalen radialen Aufweitungsweg von ca. 0,1 mm, aufspreizen.

7. Spannvorrichtung nach einem der voranstehenden Ansprüche, **dadurch gekennzeichnet, dass**
der Konuswinkel des Außenkonus der Spannzange im nichtgespreizten Zustand dem Konuswinkel des Innenkonus des Grundkörpers entspricht und/oder die Kontur des Außenkonus der Zugspannzange auf einem gedachten geraden Kreiskegel liegt.

8. Spannvorrichtung nach einem der voranstehenden Ansprüche, **dadurch gekennzeichnet, dass**
die Spreizelemente Elastomerfüllungen sind, insbesondere Elastomerfüllungen in den Schlitzen und/oder in mit den Schlitzen durchsetzten Bohrungen.

9. Spannvorrichtung nach einem der voranstehenden Ansprüche, **dadurch gekennzeichnet, dass**
der zweite Bajonett-Verschluss gegeneinander spannbare, kopplungselementseitige und zugspannzangenseitige Spannschultern aufweist, insbesondere mehrere, ganz im Besonderen drei, gleichmäßig über einen Umfang, insbesondere Innenumfang, des Kopplungselements und mehrere, ganz im Besonderen drei, gleichmäßig über einen Umfang, insbesondere Außenumfang, der Zugspannzange verteilt angeordnete Spannschultern.

10. Spannvorrichtung nach einem der voranstehenden Ansprüche, **dadurch gekennzeichnet, dass**
aneinander anlegbare Spannflächen der gegeneinander verspannbaren Spannschultern des zweiten Bajonett-Verschlusses in einer Ebene senkrecht zu einer Mittelachse der Spannvorrichtung liegen, wobei die aneinander anlegbaren Spannflächen der gegeneinander verspannbaren Spannschultern des zweiten Bajonett-Verschlusses derart an dem zweiten Bajonett-Verschluss ausgebildet und angeordnet sind, dass, wenn der erste Bajonett-Verschluss in der verriegelten Stellung ist, die aneinander anlegbaren Spannflächen weitestgehend komplett zur Deckung gelangen.

11. Spannvorrichtung nach einem der voranstehenden Ansprüche, **gekennzeichnet, durch**
einen auf die Zugspannzange wirkenden Spannmechanismus, insbesondere ein federbelastbarer bzw. federbelasteter Druckring.

12. Spannvorrichtung nach einem der voranstehenden Ansprüche, **dadurch gekennzeichnet, dass**
ein Kraftfluss einer die Zugspannzange axial einziehenden Spannkraft über einen biegeelastischen Bereich geführt wird, welcher insbesondere andererseits eines Aufnahmebereichs für das Werkzeug oder das Werkstück der Zugspannzange nach dem zweiten Bajonett-Verschluss, aber in Nähe des zweiten Bajonett-Verschlusses, ausgebildet ist.

13. Spannvorrichtung nach einem der voranstehenden Ansprüche, **dadurch gekennzeichnet, dass**
der biegeelastische Bereich balgartig, insbesondere faltenbalgartig, und/oder in der Zugstange ausgebildet ist.

14. Zugspannzange für eine Spannvorrichtung für ein Werkzeug oder Werkstück mit einer Zugspannzange und einem Kopplungselement, insbesondere nach einem der voranstehenden Ansprüche,
**gekennzeichnet durch**
ein zugspannzangenseitiges Bajonett-Verschluss-Element eines ersten Bajonett-Verschlusses und ein zugspannzangenseitiges Bajonett-Verschluss-Element eines zweiten BajonettVerschlusses, wobei das zugspannzangenseitige BajonettVerschluss-Element des ersten Bajonett-Verschlusses ein Verriegelungsanschlag ist und das zugspannzangenseitige Bajonett-Verschluss-Element des zweiten Bajonett-Verschlusses eine zugspannzangenseitige gegen eine kopplungselementseitige kraftübertragende Spannschulter verspannbare kraftübertragende Spannschulter ist.

15. Zugspannzange nach einem der voranstehenden Ansprüche, **dadurch gekennzeichnet, dass**
die Schlitze aufweisende Zugspannzange Spreizelemente aufweist, welche die Zugspannzange im gelösten Zustand aus einem nicht gespreizten Zustand, insbesondere um einen maximalen radialen Aufweitungsweg von ca. 0,1 mm, aufspreizen.

16. Zugspannzange nach einem der voranstehenden Ansprüche, **dadurch gekennzeichnet, dass**
die Spreizelemente Elastomerfüllungen sind, insbesondere Elastomerfüllungen in den Schlitzen und/oder in mit den Schlitzen durchsetzten Bohrungen.

17. Zugspannzange nach einem der voranstehenden Ansprüche, **dadurch gekennzeichnet, dass**
der zweite Bajonett-Verschlusses zugspannzangenseitig mehrere, insbesondere drei gleichmäßig über einen Umfang verteilt angeordnete, zugspannzangenseitige gegen kopplungselementseitige kraftübertragende Spannschultern verspannbare kraftübertragende Spannschultern aufweist und/oder Spannflächen der Spannschulter/-n in einer Ebene senkrecht zur Mittelachse der Zugspannzange liegt/liegen.

18. Zugspannzange nach einem der voranstehenden Ansprüche, **gekennzeichnet, durch**
mindestens eine Längsnut, welche ein gemeinsames zugspannzangenseitiges Bajonett-Verschlusselement des ersten und des zweiten Bajonett-Verschlusses ist.

19. Zugspannzange nach einem der voranstehenden Ansprüche, **dadurch gekennzeichnet, dass**
der Verriegelungsanschlag ein Endanschlag bei einer einen Hinterschnitt aufweisenden Quernut an der Zugspannzange ist.

20. Zugspannzange nach einem der voranstehenden Ansprüche, **gekennzeichnet, durch**
einen, in einen Innenkonus eines Grundkörpers aufnehmbaren, Außenkonus.

21. Zugspannzange nach einem der voranstehenden Ansprüche, **dadurch gekennzeichnet, dass**
ein Konuswinkel des Außenkonus zwischen 1° und 10°, insbesondere zwischen 2° und 3°, ganz bevorzugt ca. 2°30', ist.

22. Zugspannzange nach einem der voranstehenden Ansprüche, **gekennzeichnet, durch**
eine Aufnahmeöffnung, insbesondere eine zylindrische Aufnahmeöffnung, zur Aufnahme eines zu spannenden Werkzeugs oder Werkstücks, insbesondere eines zylindrischen Werkstücks oder eines einen zylindrischen Schaft aufweisenden Werkzeugs.

23. Zugspannzange nach einem der voranstehenden Ansprüche, **dadurch gekennzeichnet, dass**
die zugspannzangenseitigen Bajonett-Verschlusselemente des ersten und/oder zweiten Bajonettverschlusses an einer innenseitigen Umfangsfläche der Zugspannzange oder an einer außenseitigen Umfangsfläche der Zugspannzange angeordnet sind.

24. Kopplungselement für eine Spannvorrichtung für ein Werkzeug oder Werkstück mit einer Zugspannzange und einem Kopplungselement, insbesondere nach einem der voranstehenden Ansprüche,
**gekennzeichnet durch**
ein kopplungselementseitiges Bajonett-Verschluss-Element eines ersten Bajonett-Verschlusses und ein kopplungselementseitiges Bajonett-Verschluss-Element eines zweiten BajonettVerschlusses, wobei das kopplungselementseitige BajonettVerschluss-Element des ersten Bajonett-Verschlusses ein Verriegelungselement ist und das kopplungselementseitige Bajonett-Verschluss-Element des zweiten Bajonett-Verschlusses eine kopplungselementseitige gegen eine zugspannzangenseitige kraftübertragende Spannschulter verspannbare kraftübertragende Spannschulter ist.

25. Kopplungselement nach einem der voranstehenden Ansprüche, **dadurch gekennzeichnet, dass**
das Kopplungselement eine Zughülse, insbesondere eine an einer Zugstange befestigbare oder einstückig mit einer Zugstange ausgebildete Zughülse ist, insbesondere eine Zughülse mit innenseitig der Zughülse angeordneten kopplungselementseitigen Bajonett-Verschlusselementen des ersten und/oder zweiten Bajonettverschlusses, oder dass das Kopplungselement eine Zugstange ist, insbesondere eine Zugstange mit außenseitig der Zugstange angeordneten kopplungselementseitigen Bajonett-Verschlusselementen des ersten und/oder zweiten BajonettVerschlusses.

26. Kopplungselement nach einem der voranstehenden Ansprüche, **dadurch gekennzeichnet, dass**
der zweite Bajonett-Verschluss kopplungselementseitig mehrere, insbesondere drei gleichmäßig über einen Umfang verteilt angeordnete, kopplungselementseitige gegen zugspannzangenseitige kraftübertragende Spannschultern verspannbare kraftübertragende Spannschultern aufweist und/oder Spannflächen der Spannschulter/-n in einer Ebene senkrecht zur Mittelachse des Kopplungselements liegt/liegen.

27. Kopplungselement nach einem der voranstehenden Ansprüche, **dadurch gekennzeichnet, dass**
der erste Bajonett-Verschluss kopplungselementseitig mehrere, insbesondere drei gleichmäßig über einen Umfang verteilt angeordnete Verriegelungselemente aufweist

28. Kopplungselement nach einem der voranstehenden Ansprüche, **dadurch gekennzeichnet, dass**
das Verriegelungselement ein Einrastbolzen ist.

29. Verfahren zum Vorbereiten einer Spannvorrichtung für ein Werkzeug oder Werkstück mit einer Zugspannzange und einem Kopplungselement, insbesondere der Spannvorrichtung nach einem der voranstehenden Spannvorrichtungsansprüche und/oder nach einem der voranstehenden Zugspannzangenansprüche und/oder nach einen der voranstehenden Kopplungselementansprüche,
**bei dem**
die Zugspannzange unter Aufbringung einer äußeren Kraft entgegen einer inneren Kraft relativ zu dem Kopplungselement axial verschoben, insbesondere unter Aufbringung einer äußeren Kraft auf die Zugspannzange in das Kopplungselement eingeschoben, wird, wobei gleichzeitig ein erster Bajonettverschluss und ein zweiter Bajonettverschluss teilbetätigt wird, dann die Zugspannzange unter der äußeren Kraft relativ zu dem Kopplungselement in eine vorgegebene Position, insbesondere in einen Anschlag bei dem ersten Bajonett-Verschluss, gedreht wird, wobei weiter gleichzeitig der erste Bajonett-Verschluss und der zweite Bajonett-Verschluss teilbetätigt wird,
und dann die äußere Kraft, insbesondere die äußere Kraft auf die Zugspannzange, zurückgenommen wird, wobei der erste Bajonett-Verschluss verriegelt wird und der zweite BajonettVerschluss verspannt wird.

30. Verfahren nach einem der voranstehenden Verfahrensansprüchen
**dadurch gekennzeichnet, dass**
die Zugspannzange um ca. 60° relativ zu dem Kopplungselement gedreht wird.
